# EUROPEAN PATENT APPLICATION

(11) **EP 3 144 824 A1**
(43) Date of publication of application: **22.03.2017**
(21) Application number: 14892175.2
(22) Date of filing: 16.09.2014
(51) Int. Cl.: G06F 17/30

(54) **INFORMATION ACQUISITION METHOD AND DEVICE OF VOICE MAILBOX SYSTEM**

(30) Priority: 15.05.2014 CN 201410206003
(71) Applicant: ZTE Corporation, Shenzhen, Guangdong 518057 (CN)
(72) Inventor: QI, Dongbo, Shenzhen Guangdong 518057 (CN); ZHANG, Hongdang, Shenzhen Guangdong 518057 (CN); YU, Hongyu, Shenzhen Guangdong 518057 (CN); LAI, Tianjian, Shenzhen Guangdong 518057 (CN); WANG, Xianguang, Shenzhen Guangdong 518057 (CN)
(74) Representative: Brunazzi, Stefano
(86) International application number: PCT/CN2014/086670
(87) International publication number: WO 2015/172480

(57) **Abstract**

The disclosure discloses a method for information acquisition of a voice mailbox system. The method includes: when message information sent from a user of a communication sending end is received, an information characteristic of the message information is determined; whether a pre-stored information characteristic consistent with the determined information characteristic exists or not is analyzed; and when there exists the pre-stored information characteristic consistent with the determined information characteristic, information corresponding to the determined information characteristic is acquired from an information library, and the acquired information is pushed to a user of a communication receiving end. The disclosure also discloses a device for information acquisition of a voice mailbox system. Reasonable and effective analysis over the message information in the information library of the voice mailbox system is implemented.

## Description

### Technical Field

The disclosure relates to the technical field of voice mailbox systems, and in particular to a method and device for information acquisition of a voice mailbox system.

### Background

Along with continuous development of voice mailbox systems, more and more voice mailbox systems enter people's daily life and work. People may associate voice mailbox systems with communication numbers, and when a communication terminal where an associated communication number is located is busy or has no communication signal or is turned off, a user of a communication sending end may be prompted to leave a message in a voice mailbox of a user of a communication receiving end in a voice or video manner to prompt the user of the communication receiving end that there is communication initiated and a response to the communication is required to be timely given.

A user may accumulate audio and video information of many communication messages in a voice mailbox system as an information library of the voice mailbox system after associating the voice mailbox system with communication numbers, and these information is closely related to people's life and work and may provide good guidance and help in people's life and work.

At present, people only simply associate voice mailbox systems with communication numbers and process communication events to which responses may not be timely given through the voice mailbox systems, and do not reasonably and effectively analyze information in information libraries of the voice mailbox systems and apply effective information to daily life and work to provide guidance and help in daily life and work, so that the voice mailbox systems function in an undiversified manner.

### Summary

The embodiments of the disclosure provide a method and device for information acquisition of a voice mailbox system, which reasonably and effectively analyze message information in an information library of the voice mailbox system and apply effective message information to daily life and work to provide guidance and help in daily life and work so as to diversify functions of the voice mailbox system and improve performance of the voice mailbox system.

In order to achieve the purpose, one embodiment of the disclosure provides a method for information acquisition of a voice mailbox system, which may include steps that:
when receiving message information sent from a user of a communication sending end, determining an information characteristic of the message information;
analyzing whether a pre-stored information characteristic consistent with the determined information characteristic exists or not; and
when there exists the pre-stored information characteristic consistent with the determined information characteristic, acquiring information corresponding to the determined information characteristic from an information library, and pushing the acquired information to a user of a communication receiving end.

In an example embodiment, further including:
determining information characteristics of all message information received within a preset time at an interval of the preset time;
acquiring a characteristic type corresponding to each determined information characteristic according to a mapping relationship between characteristic types and information characteristics, and grouping the message information according to the characteristic types;
analyzing whether a characteristic type consistent with a pre-stored characteristic type exists in the grouped message information or not; and
when there exists the characteristic type consistent with the pre-stored characteristic type, storing the message information corresponding to the characteristic type consistent with the pre-stored characteristic type, and deleting the message information corresponding to the characteristic types inconsistent with the pre-stored characteristic type.

In an example embodiment, after acquiring the characteristic type corresponding to each determined information characteristic according to the mapping relationship between the characteristic types and the information characteristics and grouping the message information according to the characteristic types, further including:
pushing the grouped message information to the user of the communication receiving end in a list form.

In an example embodiment, after analyzing whether the pre-stored information characteristic consistent with the determined information characteristic exists or not, further including:
when there exists the pre-stored information characteristic consistent with the determined information characteristic, pushing the message information to the user of the communication receiving end.

In an example embodiment, further including:
when an information query instruction sent from the user of the communication receiving end is detected, acquiring an information characteristic corresponding to the information query instruction;
analyzing whether message information consistent with the acquired information characteristic exists or not; and
when there exists the message information consistent with the acquired information characteristic, pushing the message information consistent with the acquired information characteristic to the user of the communication receiving end.

Another embodiment of the disclosure further provides a device for information acquisition of a voice mailbox system, which may include:
a processing component, configured to, when message information sent from a user of a communication sending end is received, determine an information characteristic of the message information;
an analysis component, configured to analyze whether a pre-stored information characteristic consistent with the determined information characteristic exists or not; and
a pushing component, configured to, when there exists the pre-stored information characteristic consistent with the determined information characteristic, acquire information corresponding to the determined information characteristic from an information library, and push the acquired information to a user of a communication receiving end.

In an example embodiment, further including: a storage component, wherein
the processing component is further configured to determine information characteristics of all message information received within a preset time at an interval of the preset time,
acquire a characteristic type corresponding to each determined information characteristic according to a mapping relationship between characteristic types and information characteristics, and group the message information according to the characteristic types;
the analysis component is further configured to analyze whether a characteristic type consistent with a pre-stored characteristic type exists in the grouped message information or not;
the storage component is configured to, when there exists the characteristic type consistent with the pre-stored characteristic type, store the message information corresponding to the characteristic type consistent with the pre-stored characteristic type, and delete the message information corresponding to the characteristic types inconsistent with the pre-stored characteristic type; and
the processing component is further configured to delete the message information corresponding to the characteristic types inconsistent with the pre-stored characteristic type.

In an example embodiment, the pushing component is further configured to push the grouped message information to the user of the communication receiving end in a list form.

In an example embodiment, the pushing component is further configured to, when there exists the pre-stored information characteristic consistent with the determined information characteristic, push the message information to the user of the communication receiving end.

In an example embodiment, the processing component is further configured to, when an information query instruction sent from the user of the communication receiving end is detected, acquire an information characteristic corresponding to the information query instruction;
the analysis component is further configured to analyze whether message information consistent with the acquired information characteristic exists or not; and
the pushing component is further configured to, when the message information consistent with the acquired information characteristic exists, push the message information consistent with the acquired information characteristic to the user of the communication receiving end.

Compared with the related art, the disclosure has advantages as follows: when the message information sent from the user of the communication sending end is received, the information characteristic of the message information is determined; whether the pre-stored information characteristic consistent with the determined information characteristic exists or not is analyzed; and when there exists the pre-stored information characteristic consistent with the determined information characteristic, the information corresponding to the determined information characteristic is acquired from the information library, and the acquired information is pushed to the user of the communication receiving end, so that reasonable and effective analysis over the message information in the information library of the voice mailbox system is implemented, and the effective message information is applied to daily life and work to provide guidance and help in daily life and work to diversify the functions of the voice mailbox system and improve the performance of the voice mailbox system.

### Brief Description of the Drawings

Fig. 1 is a flowchart of a method for information acquisition of a voice mailbox system according to a first embodiment of the disclosure;
Fig. 2 is a flowchart of a method for information acquisition of a voice mailbox system according to a second embodiment of the disclosure;
Fig. 3 is a flowchart of a method for information acquisition of a voice mailbox system according to the a third embodiment of the disclosure;
Fig. 4 is a schematic diagram of functional components of a device for information acquisition of a voice mailbox system according to a first embodiment of the disclosure; and
Fig. 5 is a schematic diagram of functional components of a device for information acquisition of a voice mailbox system according to a second embodiment of the disclosure.

Implementation of the purpose, functional characteristics and advantages of the disclosure will be further described with reference to embodiments and the drawings.

### Detailed Description

It should be understood that specific embodiments described here are only adopted to explain the disclosure and not intended to limit the disclosure.

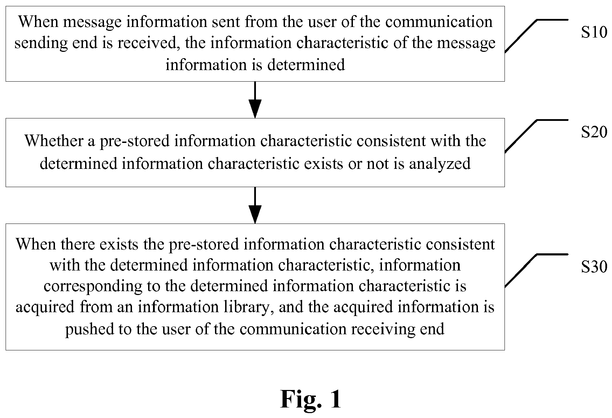

Fig. 1 is a flowchart of a method for information acquisition of a voice mailbox system according to a first embodiment of the disclosure.

It is important to emphasize that: the flowchart shown in Fig. 1 is only an example embodiment, and those skilled in the art should know that any embodiment constructed on the basis of the concept of the disclosure shall fall within the scope of the following technical solution:
when message information sent from a user of a communication sending end is received, an information characteristic of the message information is determined; whether a pre-stored information characteristic consistent with the determined information characteristic exists or not is analyzed; and when there exists the pre-stored information characteristic consistent with the determined information characteristic, information corresponding to the determined information characteristic is acquired from an information library, and the acquired information is pushed to a user of a communication receiving end.

In the embodiment, information acquisition of the voice mailbox system is gradually implemented by the following specific steps.

Step S10: when message information sent from the user of the communication sending end is received, the information characteristic of the message information is determined.

Along with continuous development of voice mailbox systems, more and more voice mailbox systems enter people's daily life and work. People may associate voice mailbox systems with communication numbers, and when a communication terminal where an associated communication number is located is busy or has no communication signal or is turned off, the user of the communication sending end may be prompted to leave a message in a voice mailbox of the user of the communication receiving end in a voice or video manner to prompt the user of the communication receiving end that there is communication initiated and a response to the communication is required to be timely given. Thus, audio and video information of many messages may be stored in an information library of a voice mailbox system. Each piece of message information in the information library may have its unique information characteristic, for example, raining, cold, fever and ball game playing. When the message information sent from the user of the communication sending end is received, the information characteristic of the message information is determined. For example, when the received message information sent from the user of the communication sending end includes a characteristic lexical item such as child cold and fever, the information characteristic of the message information is determined to be disease information, specifically child cold and fever information. That is, keyword information is extracted from the message information. In the embodiment, a device installed with the voice mailbox system is preferred to be a main body for executing the embodiment of the disclosure, for example, a mobile phone, a notebook computer, a desktop computer and an Ipad. The embodiment of the disclosure is described with a mobile phone as an example.

Step S20: whether a pre-stored information characteristic consistent with the determined information characteristic exists or not is analyzed.

Step S30: when there exists the pre-stored information characteristic consistent with the determined information characteristic, information corresponding to the determined information characteristic is acquired from an information library, and the acquired information is pushed to the user of the communication receiving end.

After the mobile phone determines the information characteristic of the message information, for example, the information characteristic of the message information is determined to be the cold and fever information when it is determined that the message information includes the characteristic lexical item such as child cold and fever, the mobile phone analyzes whether the pre-stored information characteristic consistent with the determined information characteristic exists or not, that is, whether the cold and fever information is stored in the information library or not is analyzed and whether there is the child cold and fever information or not is analyzed. When the child cold and fever information exists, the mobile phone determines that the pre-stored information characteristic consistent with the determined information characteristic exists, and acquires the information corresponding to the determined information characteristic from the information library, that is, message information related to child cold and fever is acquired from the message information stored in the information library, and for example, the acquired information may be a treatment method, precautions and the like related to child cold and fever. The precautions include information about whether medicine is required to be taken for cold and fever or not and whether medical advices are required to be sought or not. After acquiring the information corresponding to the determined information characteristic, the mobile phone pushes the acquired information to the user of the communication receiving end.

It can be understood that the mobile phone pushes the message information to the user of the communication receiving end at the same time of pushing the acquired information to the user of the communication receiving end for the user of the communication receiving end to timely know a specific content of the message information and timely take a measure, for example, sending a child to a hospital, buying medicine for the child or going home to take care of the child. For pushing the acquired information and/or the message information to the user of the communication receiving end, a manner of directly and automatically performing audio and video playing or extracting a key content from the acquired information and/or the message information and displaying the key content in a text form may be adopted. When the pre-stored information characteristic consistent with the determined information characteristic does not exist, the mobile phone pushes the message information to the user of the communication receiving end, and meanwhile, may prompt the user that no information related to the message information is acquired from the information library. In another embodiment of the disclosure, when the pre-stored information characteristic is an information characteristic of message information expected by the user of the communication receiving end to be prompted, the mobile phone pushes the message information to the user of the communication receiving end when the pre-stored information characteristic consistent with the determined information characteristic exists, that is, the message information is message information expected by the user of the communication receiving end to be received.

It can be understood that before the step that the acquired information is pushed to the user of the communication receiving end, the method may further include that: the mobile phone prompts the user of the communication receiving end whether the acquired information is required to be pushed or not, pushes the acquired information to the user of the communication receiving end when the user of the communication receiving end responds that the information is required to be pushed, and does not push the acquired information to the user of the communication receiving end when the user of the communication receiving end gives a responds that the information is not required to be pushed.

In another embodiment of the disclosure, a monitor user may also preset some monitoring information characteristics and monitor a message of the user of the communication sending end about preset characteristic information, whether the message information includes the preset information characteristics or not is judged when the message information sent from the user of the communication sending end is received, and when the message information includes the preset information characteristics, the monitor user is prompted to pay attention. The preset information characteristics may be some criminal information keywords (such as attacks and smashes in the Guangzhou railway station) or key public opinion words or the like. Such monitoring may be configured for government monitoring service to monitor key public opinions, some criminal information and the like. The message information of the user of the communication sending end is monitored about these preset information characteristics, so that the voice message information is effectively controlled.

According to the embodiment of the disclosure, when the message information sent from the user of the communication sending end is received, the information characteristic of the message information is determined; whether the pre-stored information characteristic consistent with the determined information characteristic exists or not is analyzed; and when the pre-stored information characteristic consistent with the determined information characteristic exists, the information corresponding to the determined information characteristic is acquired from the information library, and the acquired information is pushed to the user of the communication receiving end, so that reasonable and effective analysis over the message information in the information library of the voice mailbox system is implemented, and the effective message information is applied to daily life and work to provide guidance and help in daily life and work to diversify the functions of the voice mailbox system and improve the performance of the voice mailbox system.

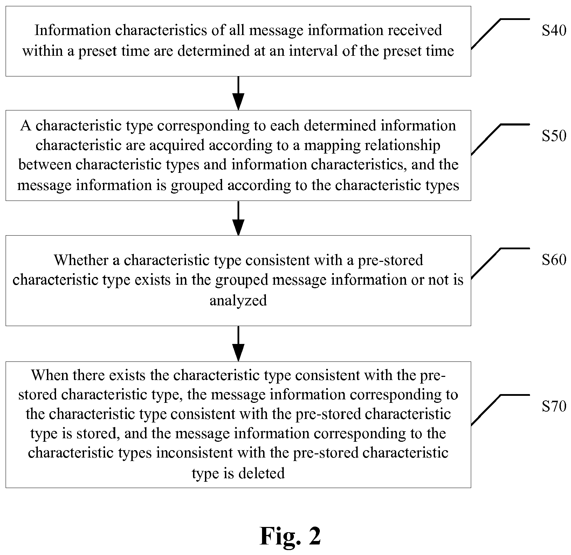

Fig. 2 is a flowchart of a method for information acquisition of a voice mailbox system according to a second embodiment of the disclosure. Based on the first embodiment, the method further includes the following steps:
Step S40: information characteristics of all message information received within a preset time are determined at an interval of the preset time;
Step S50: a characteristic type corresponding to each determined information characteristic are acquired according to a mapping relationship between characteristic types and information characteristics, and the message information is grouped according to the characteristic types;
Step S60: whether a characteristic type consistent with a pre-stored characteristic type exists in the grouped message information or not is analyzed; and
Step S70: when there exists the characteristic type consistent with the pre-stored characteristic type, the message information corresponding to the characteristic type consistent with the pre-stored characteristic type is stored, and the message information corresponding to the characteristic types inconsistent with the pre-stored characteristic type is deleted.

The preset time may be a time interval of 1 day, 3 days, a week or the like. The mobile phone starts timing when using the voice mailbox system for the first time or acquiring information characteristics of all message information, and determines the information characteristics of all the message information received within the preset time at the interval of the preset time. For example, timing is started when the information characteristics of all the message information are acquired, and after a day, the mobile phone acquires information characteristics of all message information received in the day.

After acquiring the information characteristics of all the message information in the preset time, the mobile phone acquires the characteristic type corresponding to each determined information characteristic according to the mapping relationship between the characteristic types and the information characteristics, and groups the message information received within the preset time according to the characteristic types, namely dividing message information of the same characteristic type into a group. For example, a characteristic type of child cold and fever is a disease type; a characteristic type of the Malaysia airline 370 and South Korean passenger ship sinking is a grave news type; a characteristic type of extramarital affairs of Wen Zhang and awarding of the honor of movie queen to Zhang Ziyi on the Academy Award is an entertainment type; a characteristic type of raining, sunshine and blowing is a weather type; a characteristic of badminton playing, football playing and running is a sports type; and the like. The mobile phone divides the message information of the same characteristic type into a group, and marks the group with an identifier corresponding to the characteristic type.

It can be understood that the mobile phone makes statistics about frequencies of occurrence of the information characteristics to obtain a sequence of the frequencies of occurrence of the information characteristics after determining the information characteristics of all the message information received within the preset time, pushes the statistical frequencies of occurrence of the information characteristics to the user of the communication receiving end in a list form and determines the information characteristic of which the frequency of occurrence is highest as a hot information characteristic.

The user of the communication receiving end presets characteristic types corresponding to which the message information is required to be stored and characteristic types corresponding to which the information is required to be deleted, or specifically which information characteristics in which characteristic types are required to be deleted or required to be stored. The mobile phone analyzes whether a characteristic type consistent with a pre-stored characteristic type exists in the grouped message information or not, and when the characteristic type consistent with the pre-stored characteristic type exists, stores the message information corresponding to the characteristic type consistent with the pre-stored characteristic type and deletes the message information corresponding to the characteristic types inconsistent with the pre-stored characteristic type. For example, when the pre-stored characteristic type is the grave news type and the user expects to store message information of this type, the mobile phone divides all the message information in the message information generated within the preset time into groups of respectively corresponding characteristic types, and further analyzes whether there is a group of the grave news type or not, and when there is message information in the group of the grave news type, the mobile phone stores the message information in the group of the grave news type, and deletes message information in groups not corresponding to the grave news type. Selectively preserving the message information according to an expectation of the user of the communication receiving end saves a system storage space and also effectively ensures that the message information expected by the user of the communication receiving end is preserved.

In another embodiment of the disclosure, the mobile phone may also push the grouped message information to the user of the communication receiving end in the list form after grouping the message information within the preset time according to the characteristic types. A list includes information such as a characteristic type group identifier and an information characteristic. For example, referring to Table 1, the characteristic type group identifier is the grave news type, and the information characteristic includes: the Malaysia airline 370 and South Korean passenger ship sinking. Message information about the Malaysia airline 370 and South Korean passenger ship sinking is all divided into the group of the grave news type, and a characteristic type of each piece of message information about the Malaysia airline 370 and South Korean passenger ship sinking is marked with a grave news type identifier.

**Table 1**

| | |
|---|---|
| Characteristic type | Information characteristic |
| Grave news type | Malaysia airline 370 |
| Grave news type | South Korean passenger ship sinking |

It can be understood that the step that whether the pre-stored information characteristic consistent with the determined information characteristic exists or not is analyzed may include that: the mobile phone acquires a characteristic type corresponding to the determined information characteristic at first, and when the characteristic type consistent with the pre-stored characteristic type exists, analyzes whether a pre-stored information characteristic consistent with the determined information characteristic exists in the message information consistent with the acquired characteristic type or not. The mobile phone analyzes the pre-stored characteristic type corresponding to the information characteristic of the message information at first, and when a characteristic type group consistent with the characteristic type corresponding to the message information exists, analyzes whether the pre-stored information characteristic corresponding to the information characteristic of the message information exists in the group or not. The mobile phone only analyzes the information characteristic of the group corresponding to the pre-stored characteristic type, so that system information analysis is reduced, system overhead is saved, system performance is further improved, and information acquisition efficiency of the voice mailbox system is improved.

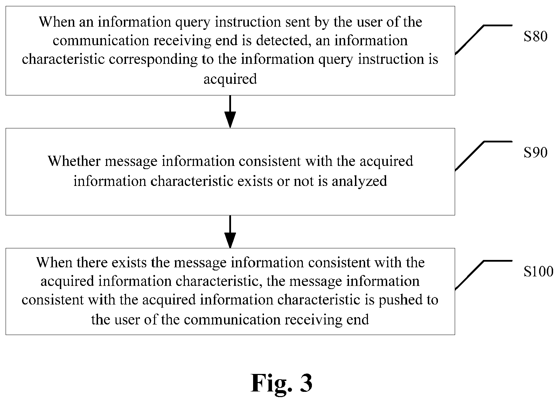

Fig. 3 is a flowchart of a method for information acquisition of a voice mailbox system according to a third embodiment of the disclosure. Based on the first and second embodiments, the method further includes the following steps:
Step S80: when an information query instruction sent by the user of the communication receiving end is detected, an information characteristic corresponding to the information query instruction is acquired;
Step S90: whether message information consistent with the acquired information characteristic exists or not is analyzed; and
Step S100: when there exists the message information consistent with the acquired information characteristic, the message information consistent with the acquired information characteristic is pushed to the user of the communication receiving end.

When intended to query the message information stored in the information library, the user of the communication receiving end may transmit the information query instruction to a client or personal portal of the voice mailbox system, the mobile phone acquires the information characteristic corresponding to the information query instruction when the information query instruction sent from the user of the communication receiving end is detected, and the information characteristic may be the Malaysia airline 370, South Korean passenger ship sinking and the like. The mobile phone analyzes whether the message information consistent with the acquired information characteristic exists or not, and for example, analyzes whether information related to the Malaysia airline 370 and South Korean passenger ship sinking is stored in the information library or not. When the information consistent with the acquired information characteristic is stored in the information library, the mobile phone pushes the message information consistent with the acquired information characteristic to the user. For example, when the information related to the Malaysia airline 370 and South Korean passenger ship sinking is stored in the information library, the stored information related to the Malaysia airline 370 and South Korean passenger ship sinking is pushed to the user of the communication receiving end. By the information characteristic, the message information expected by the user of the communication receiving end is rapidly found, and the information acquisition efficiency of the voice mailbox system is improved. In another embodiment of the disclosure, the mobile phone may also push the message information consistent with the acquired information characteristic to a voice mailbox system manager user in the list form when the message information consistent with the acquired information characteristic exists, the manager user sends response information for the list, and the mobile phone acquires the message information in the response information when receiving the response information sent on the basis of the list from the manager user, and pushes the acquired message information to the user of the communication receiving end. Manual intervention of the user during information characteristic matching of the message information in a voice management system is implemented, so that the matched message information is more consistent with an expected requirement of the user of the communication receiving end, and is more accurate, and user experiences are improved.

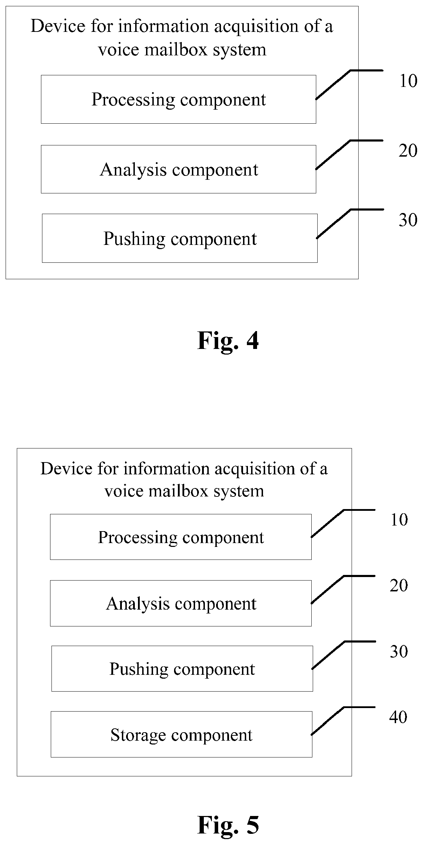

Fig. 4 is a schematic diagram of functional components of a device for information acquisition of a voice mailbox system according to a first embodiment of the disclosure. The device includes a processing component 10, an analysis component 20 and a pushing component 30.

The processing component 10 is configured to, when message information sent from a user of a communication sending end is received, determine an information characteristic of the message information.

Along with continuous development of voice mailbox systems, more and more voice mailbox systems enter people's daily life and work. People may associate voice mailbox systems with communication numbers, and when a communication terminal where an associated communication number is located is busy or has no communication signal or is turned off, a communication sender user may be prompted to leave a message in a voice mailbox of a communication receiver user in a voice or video manner to prompt the user of the communication receiving end that there is communication initiated and a response to the communication is required to be timely given. Thus, audio and video information of many messages may be stored in an information library of a voice mailbox system. Each piece of message information in the information library may have its unique information characteristic, for example, raining, cold, fever and ball game playing. When the message information sent by the user of the communication sending end is received, the information characteristic of the message information is determined. For example, when the received message information sent by the user of the communication sending end includes a characteristic lexical item such as child cold and fever, the information characteristic of the message information is determined to be disease information, specifically child cold and fever information. That is, keyword information is extracted from the message information.

The analysis component 20 is configured to analyze whether a pre-stored information characteristic consistent with the determined information characteristic exists or not.

The pushing component 30 is configured to, when there exists the pre-stored information characteristic consistent with the determined information characteristic, acquire information corresponding to the determined information characteristic from an information library, and push the acquired information to a user of a communication receiving end.

After a mobile phone determines the information characteristic of the message information, for example, the information characteristic of the message information is determined to be the cold and fever information when it is determined that the message information includes the characteristic lexical item such as child cold and fever, the mobile phone analyzes whether the pre-stored information characteristic consistent with the determined information characteristic exists or not, that is, whether the cold and fever information is stored in the information library or not is analyzed and whether there is the child cold and fever information or not is analyzed. When the child cold and fever information exists, the mobile phone determines that the pre-stored information characteristic consistent with the determined information characteristic exists, and acquires the information corresponding to the determined information characteristic from the information library, that is, message information related to child cold and fever is acquired from the message information stored in the information library, and for example, the acquired information may be a treatment method, precautions and the like related to child cold and fever. The precautions include information about whether medicine is required to be taken for cold and fever or not and whether medical advices are required to be sought or not. After acquiring the information corresponding to the determined information characteristic, the mobile phone pushes the acquired information to the user of the communication receiving end.

It can be understood that the mobile phone pushes the message information to the user of the communication receiving end at the same time of pushing the acquired information to the user of the communication receiving end for the user of the communication receiving end to timely know a specific content of the message information and timely take a measure, for example, sending a child to a hospital, buying medicine for the child or going home to take care of the child. For pushing the acquired information and/or the message information to the user of the communication receiving end, a manner of directly and automatically performing audio and video playing or extracting a key content from the acquired information and/or the message information and displaying the key content in a text form may be adopted. When the pre-stored information characteristic consistent with the determined information characteristic does not exist, the mobile phone pushes the message information to the user of the communication receiving end, and meanwhile, may prompt the user that no information related to the message information is acquired from the information library. In another embodiment of the disclosure, when the pre-stored information characteristic is an information characteristic of message information expected by the user of the communication receiving end to be prompted, the mobile phone pushes the message information to the user of the communication receiving end when the pre-stored information characteristic consistent with the determined information characteristic exists, that is, the message information is message information expected by the user of the communication receiving end to be received.

It can be understood that before the step that the acquired information is pushed to the user of the communication receiving end, the following operation may further be included: the mobile phone prompts the user of the communication receiving end whether the acquired information is required to be pushed or not, pushes the acquired information to the user of the communication receiving end when the user of the communication receiving end responds that the information is required to be pushed, and does not push the acquired information to the user of the communication receiving end when the user of the communication receiving end gives a responds that the information is not required to be pushed.

In another embodiment of the disclosure, a monitor user may also preset some monitoring information characteristics and monitor a message of the user of the communication sending end about preset characteristic information, whether the message information includes the preset information characteristics or not is judged when the message information sent from the user of the communication sending end is received, and when the message information includes the preset information characteristics, the monitor user is prompted to pay attention. The preset information characteristics may be some criminal information keywords (such as attacks and smashes in the Guangzhou railway station) or key public opinion words or the like. Such monitoring may be configured for government monitoring service to monitor key public opinions, some criminal information and the like. The message information of the user of the communication sending end is monitored about these preset information characteristics, so that the voice message information is effectively controlled.

According to the embodiment of the disclosure, when the message information sent by the user of the communication sending end is received, the information characteristic of the message information is determined; whether the pre-stored information characteristic consistent with the determined information characteristic exists or not is analyzed; and when the pre-stored information characteristic consistent with the determined information characteristic exists, the information corresponding to the determined information characteristic is acquired from the information library, and the acquired information is pushed to the user of the communication receiving end, so that reasonable and effective analysis over the message information in the information library of the voice mailbox system is implemented, and the effective message information is applied to daily life and work to provide guidance and help in daily life and work to diversify the functions of the voice mailbox system and improve the performance of the voice mailbox system.

Fig. 5 is a diagram of functional components of a device for information acquisition of a voice mailbox system according to a second embodiment of the disclosure. The device further includes a storage component 40.

The processing component 10 is further configured to: determine information characteristics of all message information received within a preset time at an interval of the preset time,
acquire a characteristic type corresponding to each determined information characteristic according to a mapping relationship between characteristic types and information characteristics, and group the message information according to the characteristic types;
the analysis component 20 is further configured to: analyze whether a characteristic type consistent with a pre-stored characteristic type exists in the grouped message information or not;
the storage component 40 is configured to, when there exists the characteristic type consistent with the pre-stored characteristic type, store the message information corresponding to the characteristic type consistent with the pre-stored characteristic type; and
the processing component 10 is further configured to: delete the message information corresponding to the characteristic types inconsistent with the pre-stored characteristic type.

The preset time may be a time interval of 1 day, 3 days, a week or the like. The mobile phone starts timing when using the voice mailbox system for the first time or acquiring information characteristics of all message information, and determines the information characteristics of all the message information received within the preset time at the interval of the preset time. For example, timing is started when the information characteristics of all the message information are acquired, and after a day, the mobile phone acquires information characteristics of all message information received in the day.

After acquiring the information characteristics of all the message information in the preset time, the mobile phone acquires the characteristic type corresponding to each determined information characteristic according to the mapping relationship between the characteristic types and the information characteristics, and groups the message information received within the preset time according to the characteristic types, namely dividing message information of the same characteristic type into a group. For example, a characteristic type of child cold and fever is a disease type; a characteristic type of the Malaysia airline 370 and South Korean passenger ship sinking is a grave news type; a characteristic type of extramarital affairs of Wen Zhang and awarding of the honor of movie queen to Zhang Ziyi on the Academy Award is an entertainment type; a characteristic type of raining, sunshine and blowing is a weather type; a characteristic of badminton playing, football playing and running is a sports type; and the like. The mobile phone divides the message information of the same characteristic type into a group, and marks the group with an identifier corresponding to the characteristic type. It can be understood that the mobile phone makes statistics about frequencies of occurrence of the information characteristics to obtain a sequence of the frequencies of occurrence of the information characteristics after determining the information characteristics of all the message information received within the preset time, pushes the statistical frequencies of occurrence of the information characteristics to the user of the communication receiving end in a list form and determines the information characteristic of which the frequency of occurrence is highest as a hot information characteristic.

The user of the communication receiving end presets characteristic types corresponding to which the message information is required to be stored and characteristic types corresponding to which the information is required to be deleted, or specifically which information characteristics in which characteristic types are required to be deleted or required to be stored. The mobile phone analyzes whether a characteristic type consistent with a pre-stored characteristic type exists in the grouped message information or not, and when the characteristic type consistent with the pre-stored characteristic type exists, stores the message information corresponding to the characteristic type consistent with the pre-stored characteristic type and deletes the message information corresponding to the characteristic types inconsistent with the pre-stored characteristic type. For example, when the pre-stored characteristic type is the grave news type and the user expects to store message information of this type, the mobile phone divides all the message information in the message information generated within the preset time into groups of respectively corresponding characteristic types, and further analyzes whether there is a group of the grave news type or not, and when there is message information in the group of the grave news type, the mobile phone stores the message information in the group of the grave news type, and deletes message information in groups not corresponding to the grave news type. Selectively preserving the message information according to an expectation of the user of the communication receiving end saves a system storage space and also effectively ensures that the message information expected by the user of the communication receiving end is preserved.

In another embodiment of the disclosure, the mobile phone may also push the grouped message information to the user of the communication receiving end in the list form after grouping the message information within the preset time according to the characteristic types. A list includes information such as a characteristic type group identifier and an information characteristic. For example, referring to Table 1, the characteristic type group identifier is the grave news type, and the information characteristic includes: the Malaysia airline 370 and South Korean passenger ship sinking. Message information about the Malaysia airline 370 and South Korean passenger ship sinking is all divided into the group of the grave news type, and a characteristic type of each piece of message information about the Malaysia airline 370 and South Korean passenger ship sinking is marked with a grave news type identifier.

It can be understood that the step that whether the pre-stored information characteristic consistent with the determined information characteristic exists or not is analyzed may include that: the mobile phone acquires a characteristic type corresponding to the determined information characteristic at first, and when the characteristic type consistent with the pre-stored characteristic type exists, analyzes whether a pre-stored information characteristic consistent with the determined information characteristic exists in the message information consistent with the acquired characteristic type or not. The mobile phone analyzes the pre-stored characteristic type corresponding to the information characteristic of the message information at first, and when a characteristic type group consistent with the characteristic type corresponding to the message information exists, analyzes whether the pre-stored information characteristic corresponding to the information characteristic of the message information exists in the group or not. The mobile phone only analyzes the information characteristic of the group corresponding to the pre-stored characteristic type, so that system information analysis is reduced, system overhead is saved, system performance is further improved, and information acquisition efficiency of the voice mailbox system is improved.

Furthermore, the processing component 10 is further configured to: when an information query instruction sent from the user of the communication receiving end is detected, acquire an information characteristic corresponding to the information query instruction;
the analysis component 20 is further configured to: analyze whether message information consistent with the acquired information characteristic exists or not; and
the pushing component 30 is further configured to: when there exists the message information consistent with the acquired information characteristic, push the message information consistent with the acquired information characteristic to the user of the communication receiving end.

When intended to query the message information stored in the information library, the user of the communication receiving end may transmit the information query instruction to a client or personal portal of the voice mailbox system, the mobile phone acquires the information characteristic corresponding to the information query instruction when the information query instruction sent from the user of the communication receiving end is detected, and the information characteristic may be the Malaysia airline 370, South Korean passenger ship sinking and the like. The mobile phone analyzes whether the message information consistent with the acquired information characteristic exists or not, and for example, analyzes whether information related to the Malaysia airline 370 and South Korean passenger ship sinking is stored in the information library or not. When the information consistent with the acquired information characteristic is stored in the information library, the mobile phone pushes the message information consistent with the acquired information characteristic to the user. For example, when the information related to the Malaysia airline 370 and South Korean passenger ship sinking is stored in the information library, the stored information related to the Malaysia airline 370 and South Korean passenger ship sinking is pushed to the user of the communication receiving end. By the information characteristic, the message information expected by the user of the communication receiving end is rapidly found, and the information acquisition efficiency of the voice mailbox system is improved. In another embodiment of the disclosure, the mobile phone may also push the message information consistent with the acquired information characteristic to a voice mailbox system manager user in the list form when the message information consistent with the acquired information characteristic exists, the manager user sends response information for the list, and the mobile phone acquires the message information in the response information when receiving the response information sent on the basis of the list from the manager user, and pushes the acquired message information to the user of the communication receiving end. Manual intervention of the user during information characteristic matching of the message information in a voice management system is implemented, so that the matched message information is more consistent with an expected requirement of the user of the communication receiving end, and is more accurate, and user experiences are improved.

Sequence numbers of the embodiments of the disclosure are only adopted for description and not intended to distinguish quality of the embodiments. By above descriptions about the implementation modes, those skilled in the art should clearly know that the method of the embodiment may be implemented by virtue of software and a necessary universal hardware platform and may certainly be implemented by virtue of hardware, and the former implementation mode is preferred under many conditions. Based on such an understanding, the technical solutions of the disclosure substantially or parts contributing to the conventional art may be embodied in form of software product, and the computer software product is stored in a storage medium (such as a Read-Only Memory/Random Access Memory (ROM/RAM), a magnetic disk and a compact disc), including a plurality of instructions configured to enable a piece of terminal equipment (which may be a mobile phone, a computer, a server, network equipment or the like) to execute the method of each embodiment of the disclosure.

The above are only the example embodiments of the disclosure and not thus intended to limit the scope of the prevent invention. All equivalent structure or equivalent flow transformations made by virtue of contents of the specification and drawings of the disclosure or direct or indirect application of the contents to other related technical fields shall fall within the scope of protection of the disclosure.

### Industrial Applicability

As mentioned above, the method and device for information acquisition of the voice mailbox system provided by the embodiment of the disclosure have beneficial effects as follows: manual intervention of a user during information characteristic matching of message information in a voice management system is implemented, and the matched message information is more consistent with an expected requirement of the user, and is more accurate, and user experiences are improved.

## Claims

1. A method for information acquisition of a voice mailbox system, comprising:
when receiving message information sent from a user of a communication sending end, determining an information characteristic of the message information;
analyzing whether a pre-stored information characteristic consistent with the determined information characteristic exists or not; and
when there exists the pre-stored information characteristic consistent with the determined information characteristic, acquiring information corresponding to the determined information characteristic from an information library, and pushing the acquired information to a user of a communication receiving end.

2. The method as claimed in claim 1, further comprising:
determining information characteristics of all message information received within a preset time at an interval of the preset time;
acquiring a characteristic type corresponding to each determined information characteristic according to a mapping relationship between characteristic types and information characteristics, and grouping the message information according to the characteristic types;
analyzing whether a characteristic type consistent with a pre-stored characteristic type exists in the grouped message information or not; and
when there exists the characteristic type consistent with the pre-stored characteristic type, storing the message information corresponding to the characteristic type consistent with the pre-stored characteristic type, and deleting the message information corresponding to the characteristic types inconsistent with the pre-stored characteristic type.

3. The method as claimed in claim 2, after acquiring the characteristic type corresponding to each determined information characteristic according to the mapping relationship between the characteristic types and the information characteristics and grouping the message information according to the characteristic types, further comprising:
pushing the grouped message information to the user of the communication receiving end in a list form.

4. The method as claimed in claim 1, after analyzing whether the pre-stored information characteristic consistent with the determined information characteristic exists or not, further comprising:
when there exists the pre-stored information characteristic consistent with the determined information characteristic, pushing the message information to the user of the communication receiving end.

5. The method as claimed in claim 1, further comprising:
when an information query instruction sent from the user of the communication receiving end is detected, acquiring an information characteristic corresponding to the information query instruction;
analyzing whether message information consistent with the acquired information characteristic exists or not; and
when there exists the message information consistent with the acquired information characteristic, pushing the message information consistent with the acquired information characteristic to the user of the communication receiving end.

6. A device for information acquisition of a voice mailbox system, comprising:
a processing component, configured to, when message information sent from a user of a communication sending end is received, determine an information characteristic of the message information;
an analysis component, configured to analyze whether a pre-stored information characteristic consistent with the determined information characteristic exists or not; and
a pushing component, configured to, when there exists the pre-stored information characteristic consistent with the determined information characteristic, acquire information corresponding to the determined information characteristic from an information library, and push the acquired information to a user of a communication receiving end.

7. The device as claimed in claim 6, further comprising: a storage component, wherein
the processing component is further configured to determine information characteristics of all message information received within a preset time at an interval of the preset time,
acquire a characteristic type corresponding to each determined information characteristic according to a mapping relationship between characteristic types and information characteristics, and group the message information according to the characteristic types;
the analysis component is further configured to analyze whether a characteristic type consistent with a pre-stored characteristic type exists in the grouped message information or not;
the storage component is configured to, when there exists the characteristic type consistent with the pre-stored characteristic type, store the message information corresponding to the characteristic type consistent with the pre-stored characteristic type, and delete the message information corresponding to the characteristic types inconsistent with the pre-stored characteristic type; and
the processing component is further configured to delete the message information corresponding to the characteristic types inconsistent with the pre-stored characteristic type.

8. The device as claimed in claim 7, wherein
the pushing component is further configured to push the grouped message information to the user of the communication receiving end in a list form.

9. The device as claimed in claim 6, wherein
the pushing component is further configured to, when there exists the pre-stored information characteristic consistent with the determined information characteristic, push the message information to the user of the communication receiving end.

10. The device as claimed in claim 6, wherein
the processing component is further configured to, when an information query instruction sent from the user of the communication receiving end is detected, acquire an information characteristic corresponding to the information query instruction;
the analysis component is further configured to analyze whether message information consistent with the acquired information characteristic exists or not; and
the pushing component is further configured to, when the message information consistent with the acquired information characteristic exists, push the message information consistent with the acquired information characteristic to the user of the communication receiving end.
